# EUROPÄISCHE PATENTSCHRIFT

(11) **EP 2 678 916 B1**
(45) Veröffentlichungstag und Bekanntmachung des Hinweises auf die Patenterteilung: **05.04.2017**
(21) Anmeldenummer: 12705278.5
(22) Anmeldetag: 16.02.2012
(51) Int. Cl.: H02J 3/14, H02J 1/14

(54) **VERFAHREN ZUR STABILISIERUNG EINES OFFENEN ZWISCHENKREISSPANNUNGSNETZES MIT MEHREREN TEILNEHMERN**
METHOD FOR STABILIZING AN OPEN INTERMEDIATE-CIRCUIT-VOLTAGE POWER SUPPLY SYSTEM COMPRISING A PLURALITY OF SUBSCRIBERS
PROCÉDÉ DE STABILISATION D'UN RÉSEAU OUVERT À TENSION DE CIRCUIT INTERMÉDIAIRE COMPRENANT PLUSIEURS ABONNÉS

(30) Priorität: 25.02.2011 DE 102011012476
(43) Veröffentlichungstag der Anmeldung: 01.01.2014
(73) Patentinhaber: AVL Software and Functions GmbH, 93059 Regensburg (DE)
(72) Erfinder: SCHARNAGL, Michael, 92712 Pirk (DE)
(74) Vertreter: Bittner, Bernhard
(86) Internationale Anmeldenummer: PCT/EP2012/052688
(87) Internationale Veröffentlichungsnummer: WO 2012/113706

(56) Entgegenhaltungen:
- EP-A1- 1 503 474
- EP-A1- 1 903 667
- EP-A2- 1 925 492
- DE-A1- 10 347 684
- DE-U1- 20 001 113
- US-A1- 2007 262 735

## Beschreibung

Die vorliegende Erfindung bezieht sich auf ein Verfahren zur Stabilisierung von offenen Zwischenkreisspannungsnetzen in einem elektrisch betriebenen Fahrzeug gemäß dem Oberbegriff des Anspruches 1.

Es ist aus dem allgemein bekannten Stand der Technik bekannt, dass zwei oder mehrere Maschinen, wie beispielsweise ein Verbrennungsmotor und ein Elektromotor mechanisch miteinander gekoppelt sind. Bei diesen als Parallelhybrid angetriebenen elektrischen Fahrzeugen kann der Antrieb des Fahrzeuges gleichzeitig über den Verbrennungsmotor sowie über den Elektromotor, welcher hierbei als Unterstützung dient, erfolgen.

Des Weiteren ist bekannt, dass beispielsweise zwei oder mehrere elektrische Maschinen mechanisch miteinander gekoppelt sind, wodurch ein Parallelbetrieb dieser beiden Maschinen entsteht, welche beispielsweise in Form eines Serienhybrids, bei dem der Verbrennungsmotor, der Generator, der Energiespeicher und der Elektromotor bzw. der Elektroantrieb in Reihe geschalten sind, durch die vom Generator erzeugte elektrische Energie angetrieben werden (siehe z.B. DE 200 01 113 U1, EP 1 903 667 A1). Dabei versorgt der Generator, welcher von einen Verbrennungsmotor angetrieben wird, den nachgeschaltenen Zwischenkreis bzw. den Energiespeicher und demnach auch die zwei elektrischen Antriebsmotoren, welche z.B. mittels eines Summengetriebes eine Achse antreiben, mit elektrischer Energie.

Jedoch können bei einem derartigen Parallelbetrieb von elektrischen Maschinen beispielsweise Fertigungstoleranzen der einzelnen Komponenten der Maschinen oder Messungenauigkeiten und unterschiedliche Regieraufbauten und -parameter zu einer ungleichmäßigen Leistungsaufteilung zwischen den elektrischen Maschinen bzw. den Elektromotoren führen.

In der Anlagen- und Kraftwerkstechnik wird beispielsweise durch eine sogenannte Statikaufschaltung (englisch "droop") eine Leistungsaufteilung beim Parallelbetrieb von elektrischen Maschinen, d.h. von elektrischen Motoren und/oder Generatoren realisiert. Dabei wird abhängig von der Auslastung, d.h. dem Stelldrehmoment der einzelnen Maschine der Sollwert der überlagerten Regelschleife, wie beispielsweise die Drehzahl und die Spannung entsprechend einer vordefinierten Statikcharakteristik angepasst bzw. nachgeregelt.

Demnach ist es die Aufgabe der vorliegenden Erfindung ein Verfahren zur Verfügung zu stellen, bei welchem das offene Zwischenkreisspannungsnetz bzw. -system (DC-Netz/System), mit mindestens einem damit verbundenen Elektromotor und Generator oder auch einer Vielzahl von damit verbundenen Elektromotoren und Generatoren, d.h. Teilnehmern stabilisiert und eine unkontrollierte Überlastung des Generators vermieden wird, wobei die einzelnen Teilnehmer unabhängig von einer Kommunikationsschnittstelle, wie beispielsweise einem CAN-Bussystem miteinander kommunizieren können.

Diese Aufgabe löst die vorliegende Erfindung mittels eines Verfahrens gemäß dem Anspruch 1.

Vorzugsweise findet dieses erfindungsgemäße Verfahren bei elektrisch betriebenen Nutzfahrzeugen, wie beispielsweise Landwirtschaftsfahrzeugen, Baumaschinen oder Kommunalmaschinen bzw. sogenannter Kommunaltechnik mit erhöhter Leistungsanforderung Anwendung, da aufgrund der elektrischen Leistung und des erhöhten Energieverbrauchs derartiger Fahrzeuge zumeist auf die Nutzung und Verwendung eines Akkumulators verzichtet wird.

Vorteilhafte Ausführungsformen und Weiterbildungen sind Gegenstand der Unteransprüche.

Demzufolge wird ein Verfahren zur Stabilisierung von offenen Zwischenkreisspannungsnetzen in einem elektrisch betriebenen Fahrzeug mit mindestens einem Generator zur Erzeugung von elektrischer Energie und mindestens einem mit einem durch den Generator mit elektrischer Energie gespeistem Gleichspannungszwischenkreis verbundenem Elektromotor zur Erzeugung definierter Bewegungen beansprucht Dabei weist der Elektromotor, welcher über elektrische Leitungen und vorzugsweise über elektrische Gleichstromleitungen mit dem Generator bzw. über den Gleichspannungszwischenkreis verbunden ist, mindestens eine Steuereinrichtung auf, welche im Wesentlichen kontinuierlich eine jeweils aktuelle Zwischenkreisspannung des Gleichspannungszwischenkreises, misst, um dadurch die jeweils aktuelle elektrische Energieerzeugungsauslastung des Generators zu ermitteln, so dass nachfolgend der Verbrauch an elektrischen Energie des einzelnen Elektromotors an die Energieerzeugungsauslastung des Generators bzw. an die zur Verfügung stehende Zwischenkreisspannung angepasst wird.

Vorzugsweise wird in Form einer Serienhybridschaltung der einzelne Generator oder die Mehrzahl an Generatoren von einem Verbrennungsmotor, wie beispielsweise einem Diesel-, Otto- oder Wankelmotor angetrieben, um elektrische Energie zu erzeugen. Die Generatoren, welche über elektrische Leitungen vorzugsweise mit dem Gleichspannungszwischenkreis bzw. Zwischenkreis verbunden sind, speisen diesen mit der erzeugten elektrischen Energie und regeln den Gleichspannungszwischenkreis mittels Leistungselektronik auf Nennspannung. Die elektrischen Maschinen, d.h. die Verbraucher, welche ebenfalls mit dem Zwischenkreis verbunden sind, sind beispielsweise elektrische Antriebsmotoren für den Fahrantrieb des Fahrzeuges, für Anbaugeräte, den Lüfter oder Pumpen und ähnliches und entnehmen dem Zwischenkreis die zum Antrieb bzw. Betrieb der einzelnen Fahrzeugkomponenten benötigte elektrische Energie.

Die Elektromotoren weisen vorzugsweise jeweils eine Steuer- und Regelungseinrichtung auf, wobei es jedoch auch denkbar ist, dass alle Elektromotoren, d.h. alle Verbraucher über eine einzige zentrale Steuereinrichtung gesteuert und/oder geregelt werden.

Diese Steuer- und Regelungseinrichtungen sind vorzugsweise datentechnisch mit eine zentral angeordnete, d.h. übergeordnete Steuereinrichtung bzw. Fahrzeugsteuereinrichtung (VCU- Vehicle Control Unit) verbunden, welche beispielsweise die Sollwerte der einzelnen Antriebe bzw. Verbraucher ermittelt.

Die Steuer- und Regelungseinrichtung selbst kann dabei eine Vielzahl an Einrichtungen, wie beispielsweise eine Messeinrichtung zum Messen der Zwischenkreisspannung aufweisen, welche jeweils unterschiedliche Funktionen erfüllen. Die einzelnen Einrichtungen können dabei ein Bestandteil der Steuer- und Regelungseinrichtung sein oder von dieser autark agieren, um der Steuer- und Regelungseinrichtung lediglich definierte Werte zur Verfügung zu stellen.

In einer bevorzugten Ausführungsform weist auch der Generator oder die Vielzahl an Generatoren jeweils eine Steuer- und Regelungseinrichtung auf, welche entsprechend einer durch die Elektromotoren geforderten elektrische Energie zur Bereitstellung der benötigten Antriebsleistung der Elektromotoren die Zwischenkreisspannung des Gleichspannungszwischenkreises auf ein definiertes ,d.h. ein lastabhängiges Spannungsniveau regelt.

Gemäß diesem definierten bzw. lastabhängigen Spannungsniveau des Generators wird die den einzelnen Elektromotoren bzw. Verbrauchern noch zur Verfügung stehende elektrische Energie mittels der Steuer- und Regelungseinrichtung mitgeteilt.

Bei dem Vorliegen einer Mehrzahl an Generatoren, welche einen Zwischenkreis mit elektrischer Energie speisen, ist es denkbar, dass jeder Generator eine eigene Steuer- und Regelungseinrichtung aufweist. Es ist jedoch auch möglich, dass alle Generatoren eine gemeinsame, zentral angeordnete Steuer- und Regelungseinrichtung aufweisen.

Es ist beispielsweise auch denkbar, dass die Steuer- und Regelungseinrichtung eine Anpassungseinrichtung aufweist, welche die zulässige aufgenommene oder abgegebene elektrischer Energie an die jeweiligen Elektromotoren regelt bzw. steuert, um z.B. ein Überlasten des Generators zu vermeiden. Zudem ist es auch möglich, dass diese Anpassungseinrichtung eine von der Steuer- und Regelungseinrichtung autarke Einrichtung darstellt, welche jeweils nach Aufforderung der Fahrzeugsteuereinrichtung oder auch eventuell jeweils nach einem definierten Zeitintervall die Leistung der Elektromaschinen durch die noch zur Verfügung stehende elektrische Energie anpasst bzw. regelt.

D.h., dass je nach Spannungsniveau des Zwischenkreises die Verbraucher und in diesem Fall die elektrischen Antriebe bzw. die Elektromotoren eine definierte Menge an elektrischer Energie fordern bzw. entnehmen oder auch einspeisen dürfen.

Damit jedoch diejenigen elektrische Motoren, welche z.B. lediglich zur Ausführung von nebengeordneten Fahrzeugfunktionen, wie beispielsweise zum Antrieb eines Klimakompressors , nicht die Versorgung von elektrischer Energie beispielsweise derjenigen elektrischer Motoren, welche zur Ausführung von Hauptfunktionen, wie den Fahrzeugantrieb zum Bewegen des Fahrzeuges dienen, verhindern bzw. behindern, werden die einzelnen Verbraucher, d.h. die einzelnen elektrischen Motoren bzw. Antriebe priorisiert.

Demnach werden die Elektromotoren mittels der Fahrzeugsteuereinrichtung je nach Einsatzbelastung und/oder Einsatzbedarf einzelner Fahrzeugfunktionen des Fahrzeuges in Hauptverbraucher und Nebenverbraucher kategorisiert, wobei die Nebenverbraucher allgemein eine niedrigere Priorität im Bezug auf die zur Verfügung stehende elektrische Energie aufweisen als die Hauptverbraucher.

Die Einsatzbelastung des Fahrzeuges ist beispielsweise die Belastung der das Fahrzeug während seines Betriebes ausgesetzt ist bzw. die Belastung die eine Fahrzeugfunktion bzw. eine Fahrzeugkomponente des Fahrzeuges über einen definierten Zeitraum erfährt. Demnach erfährt das Fahrzeug bzw. die jeweilige Fahrzeugkomponente eine Vielzahl an unterschiedlichen Einsatzbelastungen, wobei beispielsweise das Fahren des Fahrzeuges, d.h. die Speisung des Fahrantriebes des Fahrzeuges mit elektrischer Energie eine andere Einsatzbelastung des Fahrzeuges darstellt, als z.B. ein zusätzlicher Arbeitsbetrieb des Fahrzeuges durch beispielsweise den Einsatz von Antrieben von Anbaugeräten des Fahrzeuges.

Der Einsatzbedarf des Fahrzeuges ist je nach Verwendung des Fahrzeuges unterschiedlich. D.h., dass ein Fahrzeug, wie beispielsweise ein Zugfahrzeug, wie z.B. ein Ackerschlepper, ein Kommunalfahrzeug oder auch eine Pistenraupe entweder lediglich den Fahrantrieb verwendet, um sich auf einer definierten Strecke fortzubewegen oder zudem noch ein Anbaugerät oder eine Vielzahl von Anbaugeräten, wie z.B. eine Schneefräse, um dementsprechend Schnee zu räumen, einsetzt. Demnach weist das Fahrzeug ja nach erforderlicher Verwendung bzw. je nach Einsatzbedarf unterschiedliche Funktionen auf, deren dazu erforderlichen Fahrzeugkomponenten jeweils durch unterschiedliche elektrische Antriebe bzw. Elektromotoren betrieben werden.

Beispielsweise ist der Elektromotor, welcher zum Antrieb des gesamten Fahrzeuges verwendet wird dann ein Hauptverbraucher, wenn das Fahrzeug sich entlang einer Strecke bewegen muss. Wenn dazu beispielsweise noch ein Anbaugerät oder auch eine Mehrzahl an Anbaugeräten gleichzeitig eingesetzt wird, dann können diese dafür zuständigen elektrischen Antriebe ebenfalls in die Kategorie der Hauptverbraucher eingeordnet werden. Nebenverbraucher wären dann in diesem Fall beispielsweise die Elektromotoren für den Klimakompressor oder das Notstromaggregat.

Demzufolge ist es möglich, dass auch eine Mehrzahl an Haupt- und Nebenverbrauchern vorliegt, welche vorzugsweise ebenfalls entsprechend des aktuell vorherrschenden Einsatzbelastungszustandes des Fahrzeuges priorisiert werden.

Demzufolge werden in einer bevorzugten Ausführungsform bei Vorliegen einer Mehrzahl an Hauptverbrauchern diese Hauptverbraucher mittels der Fahrzeugsteuereinrichtung je nach Einsatzbelastung des Fahrzeuges im Wesentlichen immer wieder neu in höhere und niedrigere Prioritätsgruppen bezüglich der maximal zur Verfügung stehenden elektrischen Leistung bzw. Leistungsänderung eingeordnet.

Infolgedessen werden in einer weiteren bevorzugten Ausführungsform bei Vorliegen einer Mehrzahl an Nebenverbrauchern diese Nebenverbraucher mittels der Fahrzeugsteuereinrichtung je nach Einsatzbelastung des Fahrzeuges im Wesentlichen immer wieder neu in höhere und niedrigere Prioritätsgruppen bezüglich der maximal zur Verfügung stehenden elektrischen Leistung bzw. Leistungsänderung eingeordnet.

In dem oben aufgeführten Beispiel einer Pistenraupe, welches beispielsweise fahrend und schneefräsendauf einer Fahrbahn entlang fährt, könnte gemäß der Priorisierung der Hauptverbraucher der elektrische Antrieb zum Fahren des Fahrzeuges eine höhere Priorität aufweisen, als der elektrische Motor bzw. Antrieb zum Bewegen der Schneefräse.

Bei einer entsprechenden Priorisierung der Nebenantriebe, d.h. der Nebenverbraucher kann beispielsweise der Elektromotor zum Antrieb des Klimakompressors des Fahrzeuges eine höhere Priorität aufweisen, als der elektrische Motor zum Antrieb des Notstromaggregates.

Elektrische Antriebe, welche eine höhere Priorität aufweisen als andere, können bevorzugt elektrische Energie aus dem Zwischenkreis und/oder dem Generator beziehen, um deren Verwendung bzw. Gebrauch der davon angetriebenen Fahrzeugkomponenten zu gewährleisten. Die Leistung der untergeordneten Verbraucher wird demzufolge eingeschränkt.

Es ist jedoch anzumerken, dass die als Hauptverbraucher eingestuften elektrischen Antriebe bzw. Motoren immer eine höhere Priorität als die als Nebenverbraucher kategorisierten elektrischen Antriebe bzw. Motoren aufweisen und demzufolge vorrangig mit der zur Ausführung des Betriebes der entsprechenden Fahrzeugkomponenten benötigten elektrischen Energie versorgt werden.

Die Fahrzeugsteuereinrichtung weist vorzugweise eine Priorisierungs- bzw. Abgleichvorrichtung auf, welche die Kategorisierung der elektrischen Motoren bzw. Maschinen in die Kategorien Hauptverbraucher und Nebenverbraucher durchführt sowie die Priorisierung der Hauptverbraucher und Nebenverbraucher in entsprechende Prioritätsgruppen oder in eine Prioritätsreihenfolge ermöglicht. Diese Abgleichvorrichtung kann dabei beispielsweise auch eine von der Fahrzeugsteuereinrichtung autarke Einrichtung darstellen, welche lediglich nach Anforderung durch die Fahrzeugsteuereinrichtung oder eventuell auch nach einem definierten Zeitintervall die Kategorisierung und/oder die Priorisierung durchführt. Als Eingangsgröße zur Durchführung der Kategorisierung und/oder Priorisierung dienen beispielsweise die aktuelle Einsatzbelastung und/oder der aktuelle Einsatzbedarf des Fahrzeuges und/oder der Fahrzeugfunktionen bzw. der Fahrzeugkomponenten.

Es ist weiterhin denkbar, dass die einzelnen Elektromotoren je nach Einsatzbelastung und/oder Einsatzbedarf einzelner Fahrzeugfunktionen des Fahrzeuges mittels der Fahrzeugsteuereinrichtung aktiviert oder deaktiviert bzw. von einem elektrischen System angekoppelt oder abgekoppelt werden.

D.h., dass einzelne Verbraucher, insofern diese während des aktuellen Betriebes des Fahrzeuges nicht verwendet werden, deaktiviert oder von dem gemeinsamen elektrischen Zwischenkreis bzw. System bzw. Netz abgekoppelt werden, so dass diesen elektrischen Motoren keine elektrische Energie mehr zur Verfügung gestellt wird. Eine Ab- und Ankopplung der einzelnen elektrischen Motoren an den elektrischen Zwischenkreis ist beispielsweise mittels Kupplungen möglich.

Deaktivierte bzw. vom System abgekoppelte elektrische Maschinen sind folglich in keiner Kategorie, also weder als Hauptverbraucher noch ais Nebenverbraucher eingeteilt.

Verbleibend bei dem Beispiel der Pistenraupe kann beispielsweise der elektrische Motor zum Antrieb der Schneefräse deaktiviert werden, wenn z.B. entlang eines definierten Abschnittes kein Schnee gefräst werden soll. Das Deaktivieren dieses entsprechenden elektrischen Antriebes erfolgt beispielsweise durch ein Ausschalten der Schneefräse durch den Fahrer bzw. den Bediener. Dadurch wird beispielsweise der Fahrzeugsteuereinrichtung sowie auch der entsprechenden Steuer- und Regelungseinrichtung ein Signal übermittelt, durch welches diese veranlasst werden den entsprechenden elektrischen Antrieb bzw. die entsprechende elektrische Maschine zu deaktivieren bzw. vom gemeinsamen elektrischen Zwischenkreis abzukoppeln. Dadurch werden alle verbleibenden elektrischen Maschinen bzw. Motoren erneut neu kategorisiert und danach priorisiert.

Demzufolge wird bei einem Einschalten der Funktion der Schneefräse der zum Antrieb der Schneefräse notwendige elektrische Motor wieder aktiviert bzw. wieder an das gemeinsame elektrische System bzw. Netz angekoppelt. Dadurch erfolgt eine erneute Kategorisierung aller am System angekoppelten elektrischen Motoren in die Kategorien Haupt- und Nebenverbraucher sowie eine entsprechend nachfolgende Priorisierung dieser Kategorien.

Folglich werden vorzugsweise alle an einem gemeinsamen elektrischen System bzw. Netz angekoppelten elektrischen Maschinen bzw. Motoren nach jedem Deaktivieren und Aktivieren bzw. nach jedem Abkoppeln und Ankoppeln von einzelnen elektrischen Verbrauchern an das gemeinsame Netz neu kategorisiert und nachfolgend auch priorisiert.

Beim vorliegenden Beispiel der Pistenraupe ist es folglich möglich, dass bei einer Konfiguration im Fahrbetrieb, d.h., wenn die Pistenraupe beispielsweise lediglich fährt, ohne zu arbeiten, d.h. beispielsweise Schnee zu fräsen, der Fahrantrieb sowie z.B. der Antrieb des Kühlkreislaufes für beispielsweise Lüfter, Pumpen usw. in die Hauptgruppe eingeordnet sind, wobei der Fahrantrieb zudem vorzugsweise in dieser Hauptgruppe eine höhere Priorität aufweist, als der Antrieb des Kühlkreislaufes. In der Nebengruppe befinden sich dann beispielsweise die Antriebe der Anbaugeräte, des Klimakompressors und/oder des Notstromaggregates. Dabei weist der Antrieb der oder des Anbaugerätes einen höheren Leistungsbedarf auf, als beispielsweise der Antrieb des Klimakompressors, so dass der Antrieb des Anbaugerätes in der Nebengruppe eine höhere Priorität als der Antrieb des Klimakompressors aufweisen würde.

Ändert sich nun die Anforderung an die Pistenraupe derart, dass diese nun nicht mehr vorzugsweise fahren, sondern beispielsweise ein Anbaugerät, wie die Schneefräse oder ähnliches verwenden soll, ändert sich auch die Einteilung der jeweiligen Antriebe in Haupt- und nebengruppen sowie deren Priorisierung zueinander. Folglich fordert im vorliegenden Fall das Anbaugerät eine hohe Leistung und wird demnach in die Hauptkategorie eingeordnet und weist demzufolge eine größere Priorität als die Antriebe des Kühlkreislaufes und/oder des Fahrantriebes auf, welche ebenfalls in die Hauptgruppe eingeordnet sein können. Demnach setzt sich die Nebengruppe folglich beispielsweise aus Antrieben des Klimakompressors und des Notstromaggregates zusammen.

Es ist zudem denkbar, dass beispielsweise bei einer Aktivierung eines Elektromotors oder auch eines Generators sowie beispielsweise bei einem Start des Fahrzeuges und somit bei einem Start des elektrischen Gesamtsystems das Gesamtsystem bzw. das Netzwerk über eine "langsame" Kommunikationsschnittstelle, wie beispielsweise einen CAN-Bus, initialisiert wird, wodurch die Kategorisierung und Priorisierung der Verbraucher bzw. der Antriebe bzw. der elektrischen Maschinen erfolgt.

Weiterhin ist es möglich, dass über diese Kommunikationsschnittstelle beispielsweise auch die Kategorisierungen und Priorisierungen der einzelnen Verbraucher während des Betriebes bzw. Einsatzes des Fahrzeuges geändert bzw. angepasst werden können.

Auch ist es möglich, dass das Gesamtsystem bzw. Netzwerk über diese Kommunikationsschnittstelle adaptiert wird, um z.B. verbleibende Systemungenauigkeiten, wie die gemessene Zwischenkreisspannung (DC-Spannung) zu beheben. Obwohl das stabile Grundverhalten des Gesamtsystems von dieser Kommunikationsschnittstelle nicht abhängig ist, kann jedoch folglich das Gesamtverhalten sowie die mögliche Ausnutzung des Gesamtsystems durch diese Adaption weiter optimiert werden.

Bevorzugt weist die Fahrzeugsteuereinrichtung eine Inbetriebnahmeeinrichtung auf, welche die einzelnen elektrischen Motoren bzw. Antriebe deaktiviert bzw. vom elektrischen System abkoppelt, insofern diese bei aktuell vorherrschendem Betriebszustand bzw. bei aktuellem Einsatzbedarf des Fahrzeuges nicht verwendet werden. Diese Inbetriebnahmeeinrichtung ermöglicht auch ein Aktivieren bzw. ein Ankoppeln eines bestimmten elektrischen Motors an das gemeinsame elektrische Netz, sofern die Fahrzeugfunktion bzw. Fahrzeugkomponente, welche durch diesen elektrischen Motor angetrieben bzw. bewegt wird, bei aktuell vorherrschendem Einsatzbedarf benötigt wird.

Die Inbetriebnahmeeinrichtung kann auch eine zu der Fahrzeugsteuereinrichtung autarke Einrichtung darstellen, welche lediglich beispielsweise nach Aufforderung durch die Fahrzeugsteuereinrichtung einen bestimmten elektrischen Motor aktiviert oder deaktiviert.

Demnach ist es denkbar, dass die Fahrzeugsteuereinrichtung und/oder die Steuereinrichtung(en) zusätzlich vorzugsweise jeweils eine Sendeeinrichtung und Empfangseinrichtung aufweisen, welche auch eine gekoppelte Sende- und Empfangseinrichtung darstellen können, um Daten an die autarken Einrichtungen zu versenden, durch welche die Einrichtungen aufgefordert werden eine für sie spezifische Funktion auszuführen und Daten, wie beispielsweise Ergebnisdaten von diesen zu empfangen, um gegebenenfalls dadurch wieder andere Einrichtungen zu beauftragen spezifische Funktionen durchzuführen.

Vorzugsweise werden die verwendeten Prioritätsgruppen der Hauptverbraucher und/oder Nebenverbraucher gemäß der jeweiligen Einsatzbelastung und/oder des jeweiligen Einsatzbedarfes der einzelnen Fahrzeugfunktionen des Fahrzeuges in einer Speichereinrichtung gespeichert werden.

Die Speichereinrichtung ist hierbei beispielsweise ein Bestandteil der Fahrzeugsteuereinrichtung oder eine von der Fahrzeugsteuereinrichtung autarke Einrichtung, welche nach Beauftragung durch die Fahrzeugsteuereinrichtung oder beispielsweise nach in einem definierten Zeitintervall die aktuell vorliegenden Prioritätsgruppen mit der aktuell vorherrschenden Einsatzbelastung und dem aktuell vorherrschenden Einsatzbedarf abspeichert. Es ist jedoch auch möglich, dass die Steuer- und Regelungseinrichtungen der einzelnen Verbraucher jeweils eine eigene Speichereinrichtung aufweisen können, um folglich definierte Werte bzgl. entsprechender Statikkennlinien abspeichern zu können.

D.h., dass die aktuell vorliegende Kombination aus Hauptverbrauchern und Nebenverbrauchern sowie die Priorisierung der einzelnen elektrischen Motoren innerhalb der Kategorien im Zusammenhang mit dem aktuell vorliegenden Betriebszustand des Fahrzeuges betrachtet wird und als gemeinsamer Datensatz in der Speichereinrichtung vorzugsweise dauerhaft abgespeichert wird.

Unter Berücksichtigung des oben angeführten Beispiels der Pistenraupe würde beispielsweise die Einordnung der elektrischen Motoren zum Antrieb des Fahrantriebes des Fahrzeuges und zum Antrieb der Schneefräse in die Kategorie der Hauptverbraucher zusammen mit dem Betriebszustand des Fahrens und des Schneefräsens des Fahrzeuges in der Speichereinrichtung abgespeichert werden.

Dadurch kann für jeden Betriebszustand des Fahrzeuges eine definierte Kategorisierung der elektrischen Motoren in Haupt- und Nebenverbraucher sowie die entsprechende Priorisierung der in die Kategorien eingeordneten Verbraucher langfristig bzw. längerfristig in der Speichereinrichtung hinterlegt werden, um gegebenenfalls auf diese abgespeicherten Prioritätsgruppen bei einer Änderung des Betriebszustandes bzw. des Einsatzbedarfes des Fahrzeuges schnellstmöglich zugreifen zu können.

Demnach ist es möglich, dass sich die Fahrzeugsteuereinrichtung aus den in der ihr zugeordneten Speichereinrichtung hinterlegten Daten bedient, um beispielsweise mittels der Anpassungseinrichtung die entsprechenden elektrischen Antrieben bzw. Motoren die für den gewünschten Betriebszustand des Fahrzeuges notwendige Gruppeneinteilung und/oder Priorisierung bezüglich der Energie bzw. Leistung und/oder Leistungsänderung anzupassen.

Vorzugsweise wird die Kategorisierung der Elektromotoren in Hauptverbraucher und/oder Nebenverbraucher mittels der Fahrzeugsteuereinrichtung während des Einsatzes des Fahrzeuges im Wesentlichen kontinuierlich bzw. permanent geändert bzw. angepasst, da sich der Betriebszustand bzw. die Einsatzbelastung oder der Einsatzbedarf des Fahrzeuges ebenfalls im Wesentlichen kontinuierlich verändert.

Demzufolge ist es gemäß des obengenannten Beispiels möglich, dass die elektrischen Motoren bzw. die Elektromotoren bzw. die Verbraucher kurzzeitig einen erhöhten Bedarf an elektrischer Energie aufweisen, ohne, dass andere elektrische Maschinen abgeschalten bzw. deaktiviert werden können, da sich diese ebenfalls im Einsatz bzw. im Betrieb befinden.

Es ist denkbar, dass bei einem kurzzeitig erhöhten Bedarf an elektrischer Energie der Elektromotoren der Generator ebenfalls kurzeitig mehr elektrische Energie erzeugt, als ein definiertes Energieerzeugungsmaximum und dadurch kurzzeitig überlastet wird.

D.h., da der Generator bzw. die Generatoren je nach Ausführung des Fahrzeuges bzw. je nach Umfang der zeitgleich zum Einsatz kommenden Fahrzeugkomponenten und damit der zu betreibenden elektrischen Motoren zur Erzeugung einer definierten elektrischen Leistung bzw. zur Generierung einer definierten elektrischen Energie ausgelegt sind, weist jeder Generator ein Energieerzeugungsmaximum auf. Dieses Energieerzeugungsmaximum entspricht aufgrund der thermischen Erwärmung des Generators dem maximal möglichen Wert an elektrischer Energie, welche ein Generator über einen definierten Zeitraum erzeugen kann.

Eine Überlastung der Generatoren über einen längeren Zeitraum hinweg über das Energieerzeugungsmaximum hinaus führt jedoch zumeist zur Beschädigung des Generators.

Die maximale Leistung der Generatoren bzw. des Generators ist von der Drehzahl abhängig, so dass die Generatoren aufgrund thermischer Belastung lediglich ein definiertes Drehmoment ausführen können. Aus dem maximalen Drehmoment und der aktuellen Drehzahl (gekoppelt an die Drehzahl des Verbrennungsmotors) ergeben sich dann eine maximale Leistung der Generatoren und damit eine maximale Grenzleistung der Verbraucher.

Gemäß des erfindungsgemäßen Verfahrens wird demzufolge vorzugsweise die aus dem allgemeinen Stand der Technik bekannte Statikaufschaltung auf das gesamte Netzwerk erweitert, welches sowohl aus Energieverbrauchern bzw. Verbrauchern, wie den Elektromotoren und aus Energieerzeugern bzw. Erzeugern, wie den Generatoren besteht. Dadurch ist es möglich durch eine implementierte Statikcharakteristik der Generatoren eine Kommunikation zwischen den Elektromotoren und den Generatoren ohne zusätzliche Kommunikationsschnittstelle, wie beispielsweise einen CAN-Bussystem, zu realisieren.

Demzufolge regeln die Generatoren bzw. der Generator in Abhängigkeit von ihrer/seiner Auslastung bzw. dem aktuellen Drehmoment den Zwischenkreis auf ein definiertes Spannungsniveau.

Die Energieverbraucher, d.h. die Elektromotoren messen diese aktuelle Zwischenkreisspannung des Zwischenkreises und erfassen demzufolge auch ebenfalls ohne zusätzliche Kommunikationsschnittstelle über das am Zwischenkreis vorliegende Spannungsniveau die aktuelle bzw. momentan vorherrschende Auslastung der Generatoren bzw. des Generators. Durch diese bei dem erfindungsgemäßen Verfahren erfolgende Kommunikation über den Zwischenkreis bzw. über die Zwischenkreisspannung kann eine Stabilisierung des gesamten elektrischen Systems bzw. Netzes erreicht werden, unabhängig von der Dynamik, der Auslastung (Datenauslastung) und der Störanfälligkeit einer Kommunikationsschnittstelle, wie beispielsweise CAN (Controller Area Network- asynchrones, serielles Feldbussystem).

Diese Stabilisierung ist vorzugsweise bei System ohne großen Energiespeicher, wie z.B. Lithium-Ionen-Akkus sowie bei Systemen, bei denen die Summe der elektrischen Leistungen der Energieverbraucher bzw. der Elektromotoren größer ist als die maximale elektrische Gesamtleistung der Generatoren bzw. des Generators.

Weitere Vorteile, Ziele und Eigenschaften der vorliegenden Erfindung werden anhand nachfolgender Beschreibung anliegender Zeichnung erläutert.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:
- Fig.1: einen schematischen Aufbau einer prinzipiellen Reglerstruktur aus dem Stand der Technik;
- Fig.2: eine Prinzipskizze über den Aufbau des elektrischen Systems mit mehreren Teilnehmern zur Anwendung des erfindungsgemäßen Verfahrens;
- Fig.3: eine Prinzipskizze über die Konfiguration des elektrischen Systems mit mehreren Teilnehmern;
- Fig.4: ein Diagramm zur Darstellung der Statik-Kennlinie des Generators;
- Fig.5: ein Diagramm zur Darstellung der Statik-Kennlinie des Generators und des Motors;
- Fig.6a: ein Diagramm zur Veranschaulichung einer Überlastkennlinie;
- Fig.6b: ein Diagramm zur Veranschaulichung unterschiedlicher Kennlinienarten;
- Fig.6c: ein Diagramm zur Veranschaulichung einer Statikkennlinienvariante;
- Fig.6d: ein Diagramm zur Veranschaulichung einer weiteren Statikkennlinienvariante; und
- Fig.7: ein Ausschnitt aus einem Fenster eines Simulationsprogrammes zur Simulation der Verwendung von an einem gemeinsamen Gleichstromnetz angebundenen zwei Motoren und einem Generator.

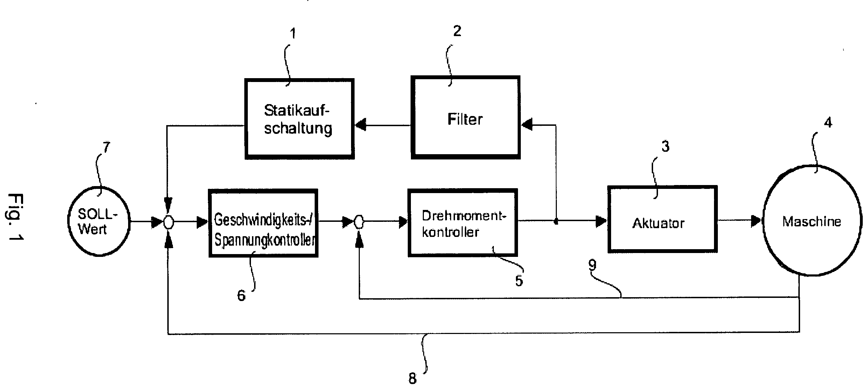

Fig.1 zeigt einen schematischen Aufbau einer prinzipiellen Reglerstruktur aus dem Stand der Technik, wie beispielsweise in der Anlagen- und Kraftwerkstechnik verwendet. Durch die Statikaufschaltung 1 kann hierbei eine Leistungsaufteilung beim Parallelbetrieb der einzelnen elektrischen Maschinen ermöglicht werden, wobei die parallel geschalteten Maschinen bzw. die Maschine 4 ohne zusätzliche Regelung und Kommunikationsschnittstelle, wie z.B. CAN mit gleichmäßig verteilter Leistungsabgabe und in der Dynamik der Regelkreise arbeitet.

Abhängig von der Auslastung der Maschinen 4 wird der SOLL-Wert 7, wie z.B. die Drehzahl, die Spannung und/oder die Geschwindigkeit entsprechend beispielsweise eines definierten Drehmomentsollwertes angepasst.

Über die Leitung 9 wird das aktuelle Drehmoment der Maschine 4 (indirekt über den Strom) gemessen und mittels eines Drehmomentkontrollers 5 geregelt. Über die Leitung 8 wird die aktuelle Geschwindigkeit oder Spannung der Maschine 4 gemessen und mittels eines Geschwindigkeits- und Spannungskontrollers 6 geregelt. Das SOLL-Drehmoment wird einem Filter 2 zugeführt und gelangt gefiltert zu der Statikaufschaltung, welche den SOLL-Wert 7 nachregelt. Mittels eines Aktuators 3 wird das Drehmoment geregelt. Die Spannung und/oder die Drehzahl wird auf den Soll-Wert 7 durch den lastabhängigen Statikwert korrigiert bzw.geregelt.

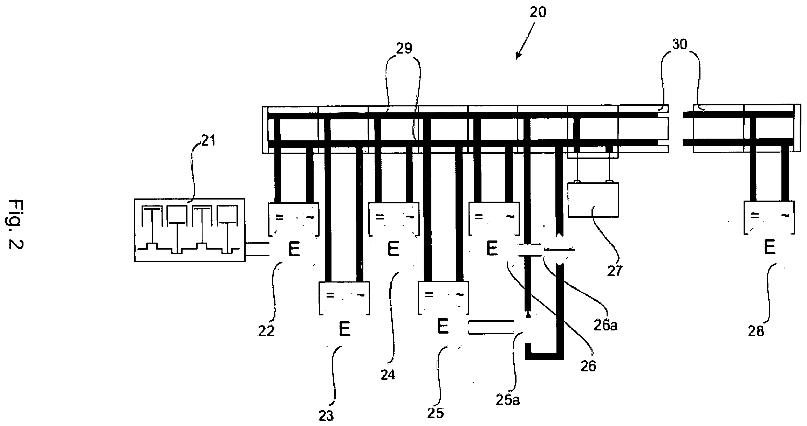

In der Fig.2 isteine skizzenhafte Übersicht über den Aufbau des elektrischen Systems 20 bzw. elektrisches Gesamtsystem 20 mit mehreren Teilnehmern 22 bis 28 zur Anwendung des erfindungsgemäßen Verfahrens dargestellt. Die Elektromotoren 23 bis 26 sind über Strom- und Kühlmittelverteilungsleitungen 29 miteinander verbunden, wobei die Elektromotoren 23 und 24 Hauptantriebe bzw. Hauptverbraucher und die Elektromotoren 25 und 26 Nebenantriebe bzw. Nebenverbraucher darstellen. Beispielsweise treibt der Elektromotor 26 eine Lüftung 26a und der Elektromotor 25 ein Pumpe 25a an. Eine Batterie 27 bzw. ein Akkumulator 27 oder auch eine 12V Lichtmaschine 27 speichern bzw. verbrauchen die von beispielsweise dem Generator 22 erzeugte Energie. Ein Verbrennungsmotor 21 treibt den einen oder auch mehrere Generatoren 22 an, welche einen Zwischenkreis 33, der vorteilhaft über die gesamte Maschine dargestellt ist und zudem beispielsweise die an den Maschinen 22 bis 26 angeordneten Kapazitäten mit entsprechender Leistungselektronik umfasst, mit elektrischer Energie speisen und diesen somit auf eine definierte Nennspannung regeln. Mittels Strom- und Kühlmittelverbinder 30 bzw. Kupplungen 30 können weitere Elektromotoren 28 an das elektrische Netz 20 bzw. an das elektrische System 20 bzw. an den Zwischenkreis 33 je nach Bedarf angekoppelt oder auch abgekoppelt werden.

Stellt der Elektromotor 28 beispielsweise einen Nebenantrieb bzw. einen Nebenverbraucher, wie z.B. für den Antrieb eines Klimakompressors dar, welcher für die aktuell vorherrschende Konfiguration bzw. den momentanen Bedarfszustand des Fahrzeuges nicht gebraucht wird, so wird dieser Elektromotor 28 einfach vom Gesamtsystem 20 und somit auch vom Zwischenkreis 33 abgekoppelt und kann folglich auch keine elektrische Energie mehr beziehen.

Die Topologie des elektrischen Gesamtsystems ändert sich im Wesentlichen permanent aufgrund des Aktivierens oder Deaktivierens bzw. Ankoppelns und Abkoppelns einzelner Verbraucher bzw. elektrischer Maschinen 23 bis 28. Dadurch ist es notwendig auch die Kategorisierung und Priorisierung der einzelnen Verbraucher, sowie auch die Leistung der Generatoren und folglich das Verhalten aller Teilnehmer 22 bis 28 des elektrischen Gesamtsystems 20 bzw. des elektrischen Netzes 20 bzw. des Zwischenkreises 33 im Wesentlichen kontinuierlich anzupassen.

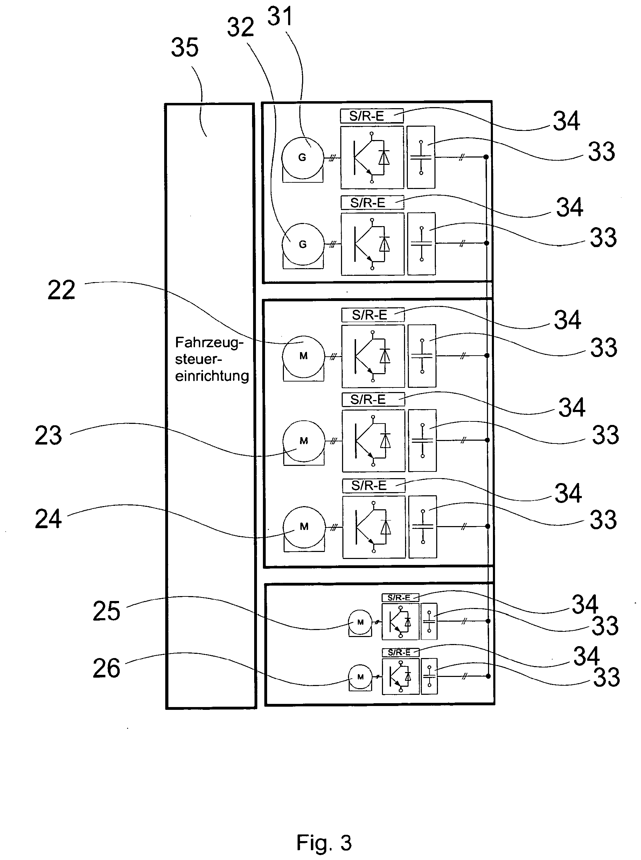

Fig.3 zeigt eine Prinzipskizze über die Konfiguration des elektrischen Systems mit mehreren Teilnehmern 22 bis 26 und 31 und 32. Die Generatoren 31 und 32 werden über einen Verbrennungsmotor (hier nicht gezeigt) angetrieben, um elektrische Energie bzw. Strom zu erzeugen und einen Zwischenkreis 33 mit der erzeugten elektrischen Energie zu versorgen bzw. aufzuladen.

Die Elektromotoren 22, 23 und 24 repräsentieren gemäß der Fig.3 die Hauptantriebe bzw. Hauptverbraucher des Fahrzeuges und sind ebenso wir die Nebenantriebe bzw. Nebenverbraucher, wie beispielsweise durch die Elektromotoren 25 und 26 dargestellt, mit dem Gleichspannungszwischenkreis 33 verbunden, um von diesem elektrische Energie zu beziehen.

Jeder Elektromotor 22 bis 26 und jeder Generator 31, 32 kann eine eigene Steuer- und Regelungseinrichtung 34 aufweisen, welche die Leistung der jeweiligen aktuell vorherrschenden Statikkennlinie regelt bzw. steuert und somit die entsprechenden Sollgrößen, wie Spannung (U), Strom (I) usw. ausregelt.

Als eine übergeordnete Steuereinrichtung agiert die Fahrzeugsteuereinrichtung 35, die VCU - Vehicle Control Unit, welche beispielsweise die einzelnen Verbraucher je nach Erfordernis des Fahrzeuges zu dem Zwischenkreis zuschalten bzw. abschalten kann.

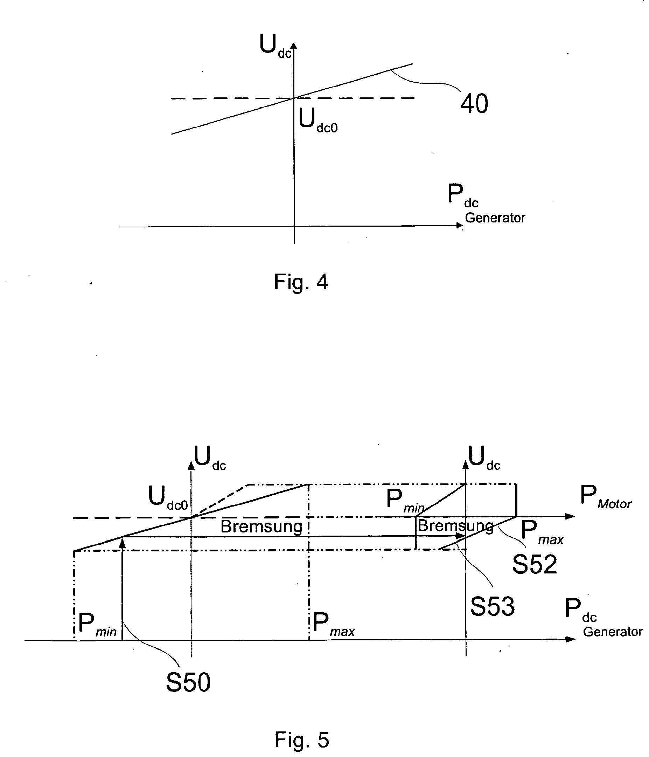

Im Diagramm der Fig.4 ist eine Statik-Kennlinie 40 des Generators gezeigt, wobei auf der Abszisse die Leistung P_{dc Generator} des Generators und auf der Ordinate die Spannung U_{dc} des Zwischenkreises abgebildet sind. Demnach steigt der Betrag der Spannung des Zwischenkreises U_{dc} mit zunehmender Leistung des Generators P_{dc Generator}.

D.h., dass bei einer motorischen Leistung des Generators, wie auf der rechten Seite des Diagrammes dargestellt, der Betrag der Spannung mit der Erhöhung der positiven Leistung ansteigt, wobei bei einer generatorischen Leistung des Generators, wie auf der linken Seite des Diagrammes dargestellt, der Betrag der Leistung ebenfalls jedoch durch eine Erhöhung der negativen Leistung ansteigt.

Das Verhalten der Spannungsregelung, d.h. der Statikcharakteristik kann in Abhängigkeit von der Richtung des Energieflusses unterschiedlich sein, da beispielsweise die maximale negative Leistung bei Verbrennungsmotoren (z.B. während eines Bremsvorganges) niedriger ist als die maximale positive Leistung.

Die Fig.5 zeigt ein Diagramm über die Statik-Kennlinie des Generators und des Motor, wobei die aktuelle Leistung des Generators P_{dc Generator} und die Leistung des Motors P_{Motor} jeweils über die Abszisse abgetragen werden und die Spannung des Zwischenkreises U_{dc} über die Ordinate.

Gemäß dem Schritt S50 wird zuerst der Zwischenkreis mit einer bestimmten Leistung beispielsweise durch die Elektromotoren belastet. Aufgrund der Spannungsregelung bzw. der Statikcharakteristik regeln die Generatoren den Zwischenkreis auf eine bestimmte Nennspannung, wie dies bei S51 gezeigt ist. Aus dieser Nennspannung bzw. dem Spannungsniveau ergeben sich die Grenzen der zulässigen Leistungsänderung der einzelnen Motoren, wie bei S52 gezeigt. D.h., dass umso größer die Auslastung der Generatoren ist, umso kleiner ist die zulässige Änderung der Leistung pro Zeit der einzelnen Elektromotoren. Demnach kann bei einer hohen Auslastung der Generatoren, beispielsweise an deren Leistungsmaximum Pₘₐₓ die den Elektromotoren zur Verfügung stehende elektrische Energie nicht mehr erhöht werden. Folglich kann die Leistung der Elektromotoren nicht mehr gesteigert bzw. reduziert werden.

Demzufolge ist es möglich, dass die Arbeitsleistung von elektrischen Maschinen bzw. Elektromotoren mit kleiner Priorität, d.h. Maschinen, welche beispielsweise als Nebenverbraucher eingestuft wurden, durch die negative Grenze der Leistungsänderung, wie bei S53 dargestellt, erreicht wird. Somit wird die Leistung der Maschine reduziert, indem dieser Elektromotor weniger elektrische Energie bezieht. Es ist zudem möglich, dass je nach Charakteristik des Verbrauchers die Leistung sogar gedrosselt werden kann.

Durch die negative Leistungsänderung besteht die Möglichkeit die Leistungsrichtung der Nebenverbraucher umzukehren, wodurch es notwendig ist die resultierende zulässige Leistung der Elektromotoren beispielsweise auf eine Untergrenze von P_{Motor}=0 zu begrenzen.

Folglich wird durch das Spannungsniveau das regelungstechnische Verhalten eines jeden Teilnehmers, d.h. der Elektromotoren und der Generatoren definiert. D.h., dass z.B. das zulässige Maximalmoment bzw. die zulässige Maximalleistung Pₘₐₓ oder die Änderung der Maximalwerte beeinflusst werden, wodurch das Verhalten des gesamten elektrischen Systems beeinflusst sowie stabilisiert wird.

Demzufolge wird die Leistung der Verbraucher, d.h. die Leistung jedes einzelnen Elektromotors an die maximale Gesamtleistung der Erzeuger (bzw. der einzelnen Verbraucher), d.h. der Generatoren angepasst, wodurch die Dynamik der Verbraucher folglich an die Ressourcen der Generatoren angepasst wird.

Mittels der Kategorisierung der Elektromotoren in Haupt- und Nebenverbraucher und der nachfolgenden Priorisierung bzw. über die Art der Kennlinie wird die zulässige Energieentnahme entsprechend der Wertigkeit bzw. der Rangfolge der eingeordneten Elektromotoren geregelt. Dadurch wird beispielsweise verhindert, dass eine Vielzahl von Nebenverbrauchern einen Hauptverbraucher, wie z.B. einen Elektromotor zum Antrieb des Fahrzeuges derart unterdrücken können, dass diesem Hautverbraucher nicht mehr genügend elektrische Energie zur Ausführung seiner Aufgabe zur Verfügung steht.

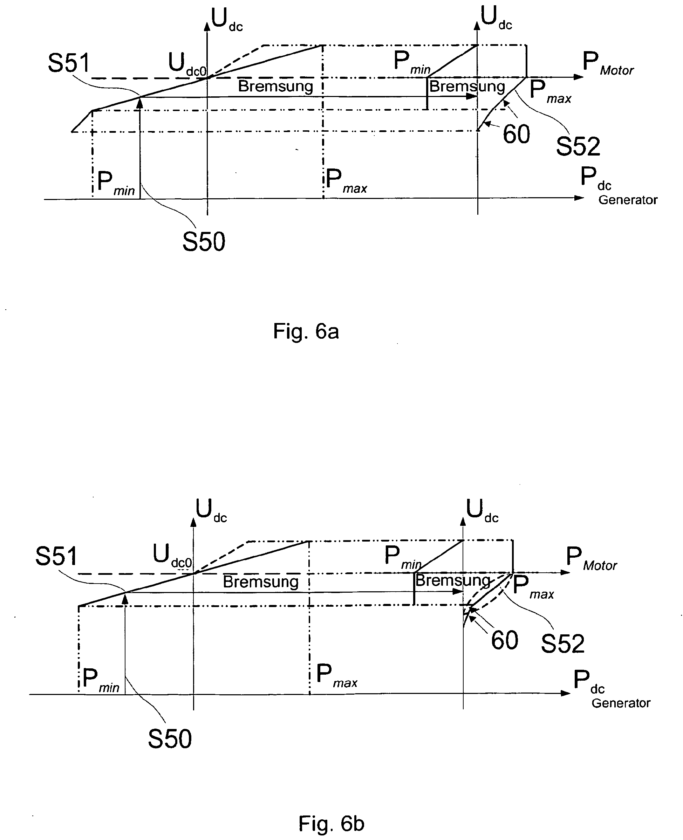

Das Diagramm der Fig.6a zeigt eine Überlastkennlinie bei einer zumindest zeitweisen bzw. kurzzeitigen Überlastung des Generators. D.h., wenn beispielsweise durch eine Vielzahl von Hauptverbrauchern eine hohe elektrische Leistung bzw. elektrische Energie verlangt wird, ohne dass die Leistung eines Verbraucher herunter geregelt werden kann, ist es erforderlich, dass der Generator bzw. die Generatoren zeitweise mehr elektrische Energie erzeugen müssen, wodurch eine vorzugsweise kurzzeitige Überlastung der Generatoren möglich ist. Diese Überlastung der Generatoren kann beispielsweise durch die Änderung der Statikkennlinien 60 erreicht werden, welche beliebige Verläufe, wie z.B. lineare oder hyperbelartige Verläufe aufweisen können, damit die Überlastung für die Verbraucher erkennbar ist.

Das Diagramm der Fig. 6b zeigt derartige Statikkennlinien 60 in unterschiedlicher Ausführung, welche beispielsweise aufgrund einer Überlast entstehen können.

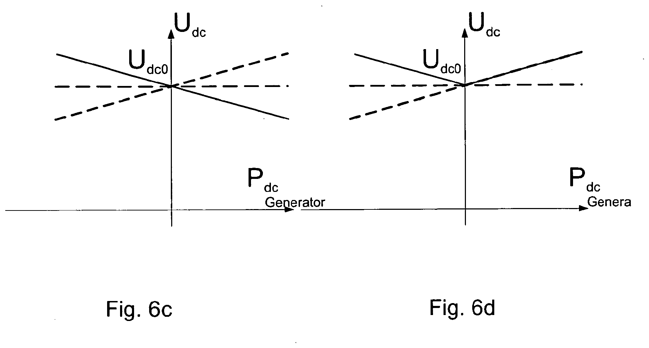

In den Figuren 6c und 6d werden unterschiedliche Varianten bzw. Ausführungsformen von sich bildenden Statikkennlinien aufgezeigt.

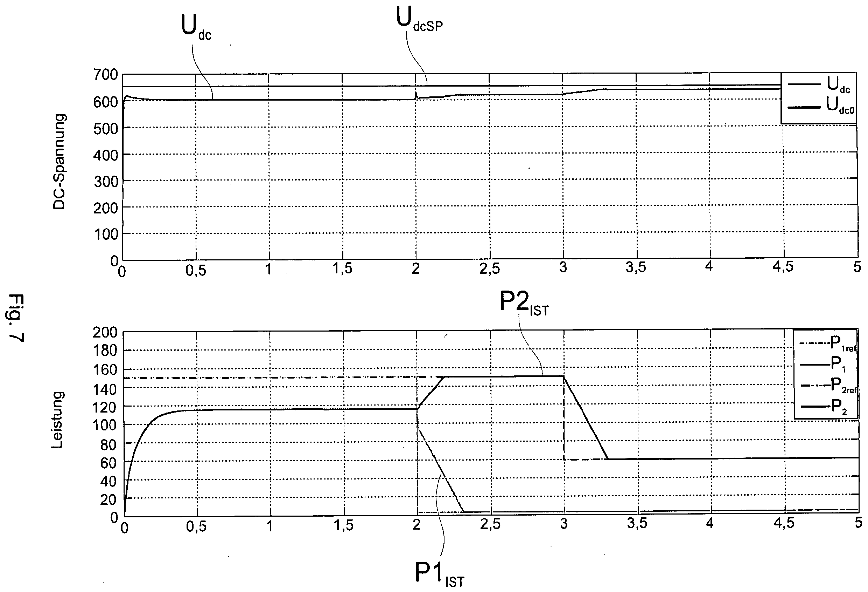

Die Fig.7 zeigt einen Ausschnitt aus einem Fenster eines Simulationsprogrammes, bei welchem die Verwendung bzw. die Leistung von zwei elektrischen Motoren und einem Generator simuliert wurden. Im oberen Bereich wird zur Unterstützung der Veranschaulichung die Veränderung der Zwischenkreisspannung in Verbindung zu der Leistung bzw. Auslastung der Generatoren bzw. elektrischen Verbrauchern, wie im unteren Bereich dargestellt, abgebildet.

Dabei wird die Ist-Leistung P1_{IST} eines ersten Elektromotors bzw. eines ersten Verbrauchers und die IST-Leistung P2_{IST} eines zweiten Elektromotors bzw. eines zweiten Verbrauchers über einen definierten Zeitraum, beispielsweise innerhalb eines Zeitfensters von ca. 5 Sekunden betrachtet. Gemäß diesem Beispiel werden beide Elektromotoren von einem Generator mit elektrischer Energie versorgt, welcher eine maximale Spannung von U_{dcSP}=650V in einem Zwischenkreis erzeugen kann.

Zu Beginn der Simulation, d.h. z.B. von 0 bis ca. 2 Sekunden fordern beide Elektromotoren beispielsweise eines Anbaugerätes und/oder eines Fahrantriebes jeweils z.B. in der Fahrzeugkonfiguration "Arbeiten" eine erhöhte elektrische Leistung von ca. P1_{SOLL}=P2_{SOLL}=150kW und damit in Summe P1_{SOLL} + P2_{SOLL} =300kW, was jedoch die maximale elektrische Leistung des Generators von ca. 240kW übersteigt. D.h. der Generator selbst ist nicht in der Lage genug elektrische Energie zu erzeugen, um beiden Elektromotoren ausreichend elektrische Energie bzw. elektrischen Strom entsprechend der geforderten Menge an elektrischer Energie aufgrund des erhöhten Bedarfs aufgrund der geforderten hohen Leistung der Elektromotoren zur Verfügung zu stellen.

Demzufolge muss die Leistung der einzelnen Elektromotoren auf ca. P1_{IST}=P2_{IsT}=120kW begrenzt werden. Da beispielsweise beide Elektromotoren Hauptverbraucher darstellen, die vorzugsweise eine annähernd gleiche Priorisierung aufweisen, ist es nicht möglich, dass ein elektrischer Motor beispielsweise weniger elektrische Energie bezieht als der andere elektrische Motor. Demnach begrenzen beide Motoren bzw. Maschinen bzw. Verbraucher ihrer elektrischen Leistung bzw. Ihren Bezug der elektrischen Energie aus dem Zwischenkreis.

Die Zwischenkreisspannung U_{dc} beträgt entsprechend der Auslastung hierbei ca. 600V.

Nach ca.2 Sekunden ändert sich die Leistungsverteilung zwischen den beiden Elektromotoren bzw. Verbrauchern, da der erste Elektromotor, welcher beispielsweise einen als Nebenverbraucher kategorisierten Antrieb antreibt nun lediglich eine Leistung von P1_{SoLL}=10kW benötigt, während der zweite Elektromotor, welcher beispielsweise einen als Hauptverbraucher kategorisierten Antrieb, wie z.B. den Fahrzeugantrieb darstellt weiterhin eine Leistungsanforderung von P2_{SOLL}=150kW aufweist.

Demnach ist die Summe der Leistungsanforderung der Elektromotoren P1_{SOLL}+P2_{SOLL}=160kW, wodurch die maximal mögliche Leistung des Generator von ca. 240kW nicht überschritten, sondern unterschritten wird. Dadurch ist es möglich, dass jeder Elektromotor die zur Verrichtung der Arbeit notwendige elektrische Energie aus dem Zwischenkreis beziehen kann, wodurch gleichzeitig aufgrund des aktuellen Leistungsüberschusses des Generators von ca. 80kW zudem der Zwischenkreis entsprechend der Statikkenlinie weiter aufgeladen werden kann.

Demzufolge steigt die Leistung des zweiten Elektromotors P2_{IST} auf 150kW, während die Leistung des ersten Elektromotors P1_{IST} geforderte 10kW ist. Zudem steigt die Zwischenkreisspannung U_{dc} leicht auf ca. 620V an.

Nach ca. weiteren 1,5 Sekunden reduziert sich auch die Leistungsanforderung des zweiten Elektromotors auf P2_{SOLL} = 60kW, während die Leistungsanforderung des ersten Elektromotors mit P1_{SOLL}=10kW konstant bleibt.

Die Summe der geforderten Leistung beider Elektromotoren ist folglich P1_{SOLL}+P2_{SOLL}=70kW. Dadurch wird die maximal mögliche Leistung des Generators weit unterschritten, so dass beiden Elektromotoren die benötigte Leistung bzw. die zur Ausführung ihrer Aufgaben benötigte elektrische Energie aus dem Zwischenkreis beziehen können.

Somit beträgt die zu diesem Zeitpunkt aktuelle Leistung des ersten Elektromotor P1_{IST}=10kW und die zu diesem Zeitpunkt aktuelle Leistung des zweiten Elektromotors P2_{IST}=60kW.

Durch die maximale Leistung des Generators, welcher folglich mehr Leistung erbringen bzw. mehr elektrische Energie zur Verfügung stellen könnte, als die Elektromotoren zu diesem Zeitpunkt verlangen, wird die Zwischenkreisspannung U_{dc} des Zwischenkreises weiter erhöht und steigt folglich auf ca. 640V an.

Somit ist für jeden Elektromotor bzw. dessen Steuerungs- und Regelungseinrichtung, welche die Zwischenkreisspannung des Zwischenkreises misst, ersichtlich, dass der Zwischenkreis beinahe seine Nennspannung von ca. 650V erreicht hat und folglich, dass der Generator bzw. die Generatoren nicht vollständig ausgelastet sind und demnach noch weitaus mehr elektrische Energie erzeugen könnten.

Demzufolge findet gemäß dem erfindungsgemäßen Verfahren eine Kommunikation zwischen den Elektromotoren und den Generatoren, d.h. den Teilnehmern eines elektrischen Gesamtsystems vorzugsweise lediglich über die Zwischenkreisspannung statt. Wird dem Gesamtsystem bzw. dem Zwischenkreis keine Leistung entnommen, regeln die Generatoren bzw. der Generator die Zwischenkreisspannung auf Nennspannung. Wird dagegen dem Gesamtsystem bzw. dem Zwischenkreis Leistung bzw. elektrische Energie entnommen bzw. entzogen, so regeln die Generatoren die Zwischenkreisspannung auf Nennspannung abzüglich eines leistungsabhängigen Spannungsterms (P-Grad/Statik), durch welchen die Lastanpassung bzw. Leistungsanpassung der Generatoren bewerkstelligt wird. Die Leistungsanpassung bzw. Lastanpassung der Elektromotoren erfolgt vorzugsweise entsprechend über einen Drehzahl-P-Grad.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Statikaufschaltung
- 2: Filter
- 3: Aktuator
- 4: Maschine
- 5: Drehmomentkontroller
- 6: Geschwindigkeits-/Spannungskontroller
- 7: SOLL-Wert
- 8: Übertragungsleitung
- 9: Übertragungsleitung
- 20: elektrisches System
- 21: Verbrennungsmotor
- 22: Generator
- 23: Elektromotor - Hauptverbraucher
- 24: Elektromotor - Hauptverbraucher
- 25: Elektromotor - Nebenverbraucher
- 25a: Lüfter
- 26: Elektromotor - Nebenverbraucher
- 26a: Pumpe
- 27: Batterie/Akkumulator
- 28: Elektromotor- Nebenverbraucher
- 29: Strom- und Kühlmittelverteiler
- 30: Strom- und Kühlmittelverbinder /Kupplung
- 31: Generator
- 32: Generator
- 33: Zwischenkreis
- 34: Steuer- und Regelungseinrichtung
- 35: Fahrzeugsteuereinrichtung
- 40: Statik-Kennlinie
- 60: Statiklinie
- P1_{IST}: IST-Leistung des ersten Elektromotors
- P2_{IST}: IST-Leistung des zweiten Elektromotors
- S50: Zwischenkreis belasten
- S51: Zwischenkreis auf Nennspannung regeln
- S52: Grenzen der zulässigen Leistungsänderung
- S53: negative Grenze der Leistungsänderung
- U_{dc}: aktuelle Zwischenkreisspannung
- U_{dcSP}: maximale Zwischenkreisspannung

## Patentansprüche

1. Verfahren zur Stabilisierung von offenen Zwischenkreisspannungsnetzen in einem elektrisch betriebenen Fahrzeug mit mindestens einem Generator (22, 31, 32) zur Erzeugung von elektrischer Energie und mindestens einem mit einem durch den Generator (22, 31, 32) mit elektrischer Energie gespeisten Gleichstromzwischenkreis (33) verbundenen Elektromotor (23 - 26, 28) zur Erzeugung definierter Bewegungen, **dadurch gekennzeichnet, dass**
der Elektromotor (23 - 26, 28), welcher über elektrische Leitungen (29) mit dem Generator (22, 31, 32) bzw. dem Gleichspannungszwischenkreis (33) verbunden ist, mindestens eine Steuereinrichtung (34) aufweist, welche im Wesentlichen kontinuierlich eine jeweils aktuelle Zwischenkreisspannung des Gleichspannungszwischenkreises (33) misst, um dadurch die jeweils aktuelle elektrische Energieerzeugungsauslastung des Generators (31, 32) ohne zusätzliche Kommunikationsschnittstelle zu ermitteln, so dass nachfolgend der Verbrauch an elektrischer Energie des einzelnen Elektromotors (23 - 26, 28) an die Energieerzeugungsauslastung des Generators (22, 31, 32) bzw. an die zur Verfügung stehende Zwischenkreisspannung angepasst wird, wobei der Generator (31, 32) eine Steuer- und Regelungseinrichtung (34) aufweist, welche entsprechend einer durch die Elektromotoren (23 - 26, 28) geforderten elektrische Energie zur Bereitstellung der benötigten Antriebsleistung der Elektromotoren (23 - 26, 28) die Zwischenkreisspannung des Gleichspannungszwischenkreises (33) auf ein lastabhängiges Spannungsniveau regelt,
wobei, wenn dem Gleichspannungszwischenkreis (33) keine Leistung entnommen wird, die Zwischenkreisspannung auf einen Nennwert geregelt wird,
und wobei, wenn dem Gleichspannungszwischenkreis (33) Leistung entnommen wird, die Zwischenkreisspannung auf einen Wert geregelt wird, welcher niedriger ist als der Nennwert und der Differenz aus dem Nennwert und eines von der entnommenen Leistung definiert abhängigen Spannungsterms entspricht.

2. Verfahren gemäß Anspruch 1,
**dadurch gekennzeichnet, dass**
gemäß dem lastabhängigen Spannungsniveau des Generators die den einzelnen Elektromotoren (23 - 26, 28) noch zur Verfügung stehende elektrische Energie mittels der Steuer- und Regelungseinrichtung (34) mitgeteilt wird .

3. Verfahren gemäß einem der vorangegangenen Ansprüche,
**dadurch gekennzeichnet, dass**
die Elektromotoren (23 - 26, 28) mittels der Fahrzeugsteuereinrichtung (35) je nach Einsatzbelastung und/oder Einsatzbedarf einzelner Fahrzeugfunktionen des Fahrzeuges in Hauptverbraucher (23 -24) und Nebenverbraucher (25, 26, 28) kategorisiert werden, wobei die Nebenverbraucher (25, 26, 28) allgemein eine niedrigere Priorität im Bezug auf die zur Verfügung stehende elektrische Energie aufweisen als die Hauptverbraucher (23 -24).

4. Verfahren gemäß Anspruch 3,
**dadurch gekennzeichnet, dass**
bei Vorliegen einer Mehrzahl an Hauptverbrauchern (23 -24) diese Hauptverbraucher (23 -24) mittels der Fahrzeugsteuereinrichtung (35) je nach Einsatzbelastung des Fahrzeuges im Wesentlichen immer wieder neu in höhere und niedrigere Prioritätsgruppen bezüglich der maximal zur Verfügung stehenden elektrischen Energie eingeordnet werden.

5. Verfahren gemäß einem der Ansprüche 3 oder 4,
**dadurch gekennzeichnet, dass**
bei Vorliegen einer Mehrzahl an Nebenverbrauchern (25, 26, 28) diese Nebenverbraucher (25, 26, 28) mittels der Fahrzeugsteuereinrichtung (35) je nach Einsatzbelastung des Fahrzeuges im Wesentlichen immer wieder neu in höhere und niedrigere Prioritätsgruppen bezüglich der maximal zur Verfügung stehenden elektrischen Energie eingeordnet werden.

6. Verfahren gemäß einem der Ansprüche 3 bis 5,
**dadurch gekennzeichnet, dass**
die einzelnen Elektromotoren (23 - 26, 28) je nach Einsatzbelastung und/oder Einsatzbedarf einzelner Fahrzeugfunktionen des Fahrzeuges mittels der Fahrzeugsteuereinrichtung (35) aktiviert oder deaktiviert bzw. von einem elektrischen System (20) angekoppelt oder abgekoppelt werden.

7. Verfahren gemäß einem der Ansprüche 3 bis 6,
**dadurch gekennzeichnet, dass**
die verwendeten Prioritätsgruppen der Hauptverbraucher (23 -24) und/oder Nebenverbraucher (25, 26, 28) gemäß der jeweiligen Einsatzbelastung und/oder des jeweiligen Einsatzbedarfes der einzelnen Fahrzeugfunktionen des Fahrzeuges in einer Speichereinrichtung gespeichert werden.

8. Verfahren gemäß einem der Ansprüche 3 bis 7,
**dadurch gekennzeichnet, dass**
die Kategorisierung der Elektromotoren (23 - 26, 28) in Hauptverbraucher (23 -24) und/oder Nebenverbraucher (25, 26, 28) mittels der Fahrzeugsteuereinrichtung (35) während des Einsatzes des Fahrzeuges geändert bzw. angepasst wird.

9. Verfahren gemäß einem der vorangegangenen Ansprüche,
**dadurch gekennzeichnet, dass**
bei einem kurzzeitig erhöhten Bedarf an elektrischer Energie der Elektromotoren (23 - 26, 28) der Generator (22, 31, 32) ebenfalls kurzeitig mehr elektrische Energie erzeugt, als ein definiertes Energieerzeugungsmaximum und dadurch kurzzeitig überlastet wird.

10. Verfahren gemäß einem der vorangegangenen Ansprüche,
**dadurch gekennzeichnet, dass**
der Generator (22, 31, 32) mittels eines Verbrennungsmotors (21) angetrieben wird.

## Claims

1. Method for stabilising open intermediate circuit voltage networks in an electrically operated vehicle having at least one generator (22, 31, 32) for generating electrical energy and at least one electric motor (23-26, 28) for generating defined movements, which motor is connected to a DC intermediate circuit (33) that is supplied with electrical energy by the generator (22, 31, 32), **characterised in that** the electric motor (23-26, 28), which is connected to the generator (22, 31, 32) or the DC intermediate circuit (33) via electrical lines (29), comprises at least one control device (34) which measures a present intermediate circuit voltage, in each case, of the DC intermediate circuit (33) on a substantially continuous basis in order to thereby determine the present energy generation capacity utilisation, in each case, of the generator (31, 32) without an additional communication interface, such that the electrical energy consumption of the individual electric motor (23-26, 28) is subsequently adapted to the energy generation capacity utilisation of the generator (22, 31, 32) or to the available intermediate circuit voltage, the generator (31, 32) comprising a control device (34) which regulates the intermediate circuit voltage of the DC intermediate circuit (33) to a load-dependent level according to the electrical energy required by the electric motors (23-26, 28) in order to provide the necessary drive power for the electric motors (23-26, 28), the intermediate circuit voltage being regulated to a nominal value when no power is drawn from the DC intermediate circuit (33), and the intermediate circuit voltage being regulated to a value that is lower than the nominal value and that corresponds to the difference between the nominal value and a voltage term that is dependent in a defined manner on the power drawn when power is drawn from the DC intermediate circuit (33).

2. Method according to claim 1, **characterised in that** the electrical energy still available for the individual electric motors (23-26, 28) is communicated by means of the control device (34) according to the load-dependent voltage level of the generator.

3. Method according to either of the preceding claims, **characterised in that** the electric motors (23-26, 28) are categorised into main users (23-24) and auxiliary users (25, 26, 28) by means of the vehicle control device (35) according to the operational load and/or operational requirements of individual vehicle functions of the vehicle, the auxiliary users (25, 26, 28) generally having a lower priority than the main users (23-24) with regard to the electrical energy available.

4. Method according to claim 3, **characterised in that**, if there is a plurality of main users (23-24), the vehicle control device (35) substantially continuously re-classifies these main users (23-24), according to the operational load of the vehicle, into higher and lower priority groups with regard to the maximum available electrical energy.

5. Method according to either claim 3 or claim 4, **characterised in that**, if there is a plurality of auxiliary users (25, 26, 28), the vehicle control device (35) substantially continuously re-classifies these auxiliary users (25, 26, 28), according to the operational load of the vehicle, into higher and lower priority groups with regard to the maximum available electrical energy.

6. Method according to any of claims 3 to 5, **characterised in that** the individual electric motors (23-26, 28) are activated or deactivated and/or are coupled to or decoupled from an electrical system (20) by means of the vehicle control device (35) according to the operational load and/or operational requirements of individual vehicle functions of the vehicle.

7. Method according to any of claims 3 to 6, **characterised in that** the priority groups of main users (23-24) and/or auxiliary users (25, 26, 28) that are used are stored in a storage device according to the operational load and/or the operational requirements of each of the individual vehicle functions of the vehicle.

8. Method according to any of claims 3 to 7, **characterised in that** the categorisation of the electric motors (23-26, 28) into main users (23-24) and/or auxiliary users (25, 26, 28) is changed or adapted by means of the vehicle control device (35) during operation of the vehicle.

9. Method according to any of the preceding claims, **characterised in that**, when the electric motors (23-26, 28) briefly require a greater amount of electrical energy, the generator (22, 31, 32) also briefly generates more electrical energy than a defined energy generation maximum, and is thus briefly overloaded.

10. Method according to any of the preceding claims, **characterised in that** the generator (22, 31, 32) is driven by means of an internal combustion engine (21).

## Revendications

1. Procédé pour la stabilisation de réseaux de tension de circuits intermédiaires dans un véhicule électrique avec au moins un générateur (22, 31, 32) pour la génération d'énergie électrique et au moins un moteur électrique (23 - 26, 28) relié à un circuit intermédiaire à courant continu (33) alimenté par le générateur (22, 31, 32) en énergie électrique, pour la génération de mouvements définis,
**caractérisé en ce que**
le moteur électrique (23 - 26, 28), qui est relié, par l'intermédiaire de lignes électriques (29), avec le générateur (22, 31, 32) ou le circuit intermédiaire à tension continue (33), comprend au moins un dispositif de commande (34), qui mesure de manière globalement continue une tension de circuit intermédiaire actuelle du circuit intermédiaire à tension continue (33), afin de déterminer la charge de production d'énergie électrique actuelle du générateur (31, 32) sans interface de communication supplémentaire, de façon à ce que la consommation en énergie électrique du moteur électrique (23 - 26, 28) soit ensuite adaptée à la charge de production d'énergie du générateur (22, 31, 32) ou à la tension de circuit intermédiaire mise à disposition, le générateur (31, 32) comprenant un dispositif de commande et de régulation (34), qui régule, en fonction d'une énergie électrique exigée par les moteurs électriques (23 - 26, 28) pour la production de la puissance d'entraînement nécessaire des moteurs électriques (23 - 26, 28), la tension de circuit intermédiaire du circuit intermédiaire à tension continue (33) à un niveau de tension dépendant de la charge,
moyennant quoi, lorsque aucune puissance n'est prélevée dans le circuit intermédiaire à tension continue (33), la tension du circuit intermédiaire est régulée à une valeur nominale et
moyennant quoi, lorsqu'une puissance est prélevée dans le circuit intermédiaire à tension continue (33), la tension du circuit intermédiaire est régulée à une valeur qui est inférieure à la valeur nominale et correspondant à la différence entre la valeur nominale et un terme de tension dépendant de la puissance prélevée.

2. Procédé selon la revendication 1,
**caractérisé en ce que**
selon le niveau de tension dépendant de la charge du générateur, l'énergie électrique encore disponible pour les différents moteurs électriques (23 - 26, 28) est communiquée au moyen du dispositif de commande et de régulation (34).

3. Procédé selon l'une des revendications précédentes,
**caractérisé en ce que**
les moteurs électriques (23 - 26, 28) sont classés par le moyen du dispositif de commande du véhicule (35) selon la puissance et/ou les besoins des différentes fonctions du véhicule, en consommateurs principaux (23 - 24) et en consommateurs secondaires (25, 26, 28), les consommateurs secondaires (25, 26, 28) possédant généralement une priorité plus faible, en ce qui concerne l'énergie disponible, que les consommateurs principaux (23 - 24).

4. Procédé selon la revendication 3,
**caractérisé en ce que**
s'il existe plusieurs consommateurs principaux (23 - 24), ces consommateurs principaux (23 - 24) sont classés par le dispositif de commande du véhicule (35) selon la charge du véhicule, globalement de manière continue, en groupes de priorité élevée et basse, en ce qui concerne l'énergie électrique maximale disponible.

5. Procédé selon l'une des revendications 3 ou 4,
**caractérisé en ce que**
s'il existe plusieurs consommateurs secondaires (25, 26, 28), ces consommateurs secondaires (25, 26, 28) sont classés par le dispositif de commande du véhicule (35) selon la charge du véhicule, globalement de manière continue, en groupes de priorité élevée et basse, en ce qui concerne l'énergie électrique maximale disponible.

6. Procédé selon l'une des revendications 3 à 5,
**caractérisé en ce que**
les différents moteurs électriques (23 - 26, 28) sont activés ou désactivés selon la charge et/ou les besoins des différentes fonctions du véhicule par le dispositif de commande du véhicule (35) ou sont couplés et découplés par un système électrique (20).

7. Procédé selon l'une des revendications 3 à 6,
**caractérisé en ce que**
les groupes de priorité utilisés pour les consommateurs principaux (23 - 24) et/ou les consommateurs secondaires (25, 26, 28), selon la charge et/ou les besoins des différentes fonctions du véhicule, sont enregistrés dans un dispositif de stockage.

8. Procédé selon l'une des revendications 3 à 7,
**caractérisé en ce que**
le classement des moteurs électriques (23 - 26, 28) en consommateurs principaux (23 - 24) et/ou en consommateurs secondaires (25, 26, 28) par le dispositif de commande de véhicule (35) est modifié ou adapté pendant l'utilisation du véhicule.

9. Procédé selon l'une des revendications précédentes,
**caractérisé en ce que**
dans le cas d'un besoin en énergie électrique, augmenté sur une courte période, des moteurs électriques (23 - 26, 28), le générateur (22, 31, 32) produit également sur une courte période plus d'énergie électrique qu'un maximum de production d'énergie défini et est donc en surcharge pendant une courte période.

10. Procédé selon l'une des revendications précédentes,
**caractérisé en ce que**
le générateur (22, 31, 32) est entraîné au moyen d'un moteur à combustion (21).
